# EUROPEAN PATENT APPLICATION

(11) **EP 4 190 724 A1**
(43) Date of publication of application: **07.06.2023**
(21) Application number: 21854607.5
(22) Date of filing: 16.07.2021
(51) Int. Cl.: B65G 3/02, G01W 1/08, G01W 1/10, G06Q 10/04

(54) **MANAGEMENT SYSTEM, MANAGEMENT DEVICE, MANAGEMENT METHOD, AND MANAGEMENT PROGRAM**

(30) Priority: 03.08.2020 JP 2020131552
(71) Applicant: Kurita Water Industries Ltd., Tokyo 164-0001 (JP); Hitachi, Ltd., Tokyo 100-8280 (JP)
(72) Inventor: KIKKAWA Takashi, Tokyo 164-0001 (JP); IKEGAWA Naoki, Tokyo 164-0001 (JP); KURINO Takuji, Tokyo 164-0001 (JP); TAKANOSE Koh, Tokyo 100-8280 (JP); TAKA Daisuke, Tokyo 100-8280 (JP); KAIYA Emi, Tokyo 100-8280 (JP)
(74) Representative: TBK
(86) International application number: PCT/JP2021/026814
(87) International publication number: WO 2022/030227

(57) **Abstract**

To provide a management system, a management apparatus, a management method, and a program capable of predicting a moisture content at a specific time point in the future of a material arranged in a yard. An aspect of the present invention provides a management system of a material which is a steelmaking raw material and/or a fuel for power generation and which is managed outdoors. The management system includes a moisture content information acquiring unit, a weather information acquiring unit, and a predicting unit. The moisture content information acquiring unit is configured to acquire moisture content information indicating a moisture content contained in the material. The weather information acquiring unit is configured to acquire weather information indicating outdoor meteorological phenomena forecasted for the future. The predicting unit is configured to predict a moisture content contained in the material at a specific time point in the future based on the moisture content information and the weather information.

## Description

### Technical Field

The present invention relates to a management system, a management device (apparatus), a management method, and a management program.

### Background Art

Iron ore, coal, dust, slag, and the like as steelmaking raw materials at ironworks and coal and the like as fuel for power generation at electric power plants are stacked and stored in yards in a state of piles. Such materials stored in this manner are used after being subjected to various kinds of processing depending on intended uses.

In this case, materials such as coal are arranged in yards while being exposed to the elements. Therefore, when a moisture content of the materials such as coal increases due to absorption of water through precipitation or the like, various problems can occur. For example, when iron ore, coal, dust, and slag as steelmaking raw materials have a high moisture content, clogging may occur in a hopper, a silo, a belt conveyor transfer part, or the like. Furthermore, when coal as a coke raw material has a high moisture content, since a bulk density of coke charged into a coke oven drops, production decreases. Moreover, when a moisture content contained in a material that constitutes a pile in a yard becomes excessively high, the material constituting the pile may run off and the likelihood of a pile collapse increases.

Conventionally, in order to measure moisture of a material such as coal, a method of sampling a small amount of a material from a raw material pile in a yard and measuring a moisture content of the sample, a method of measuring a moisture content using a moisture meter on a belt conveyor for raw material transportation, and the like (for example, refer to PTL 1) are used.

### Citation List

### Patent Literature

PTL 1: JPH 07-43319 A

### Summary of Invention

### Technical Problem

However, methods involving sampling are time- and laborconsuming. With a method such as that described in PTL 1, since the moisture content of a material such as coal is measured after the material is transported from a yard, pile collapse that occurs while the material is being arranged as a pile cannot be prevented and an agent to be added to the material such as coal may run short when the material has a high moisture content.

In view of the circumstances described above, an object of the present invention is to provide a management system, a management apparatus, a management method, and a program capable of predicting a moisture content at a specific time point in the future of a material arranged in a yard.

### Solution to Problem

An aspect of the present invention provides a management system of a material which is a steelmaking raw material and/or a fuel for power generation and which is managed outdoors. The management system includes a moisture content information acquiring unit, a weather information acquiring unit, and a predicting unit. The moisture content information acquiring unit is configured to acquire moisture content information indicating a moisture content contained in the material. The weather information acquiring unit is configured to acquire weather information indicating outdoor meteorological phenomena forecasted for the future. The predicting unit is configured to predict a moisture content contained in the material at a specific time point in the future based on the moisture content information and the weather information.

Specifically, each of the aspects described below may be provided.

The management system described above, wherein the moisture content information acquiring unit is configured to acquire the moisture content information for each pile of the material, and the predicting unit is configured to predict a moisture content contained in the material at a specific time point in the future for each pile of the material.

The management system described above, further including a first output unit, wherein the first output unit is configured to output, for each pile of the material, a moisture content predicted by the predicting unit.

The management system described above, further including a determining unit, wherein the determining unit is configured to determine whether or not a problem may arise in the material based on a prediction of the moisture content.

The management system described above, further including a second output unit, wherein the second output unit is configured to output a warning when the determining unit determines that a problem may arise in the material.

The management system described above, further including a pile information acquiring unit, wherein the pile information acquiring unit is configured to acquire pile information including one or more selected from the group consisting of an area, a volume, a planar shape, a three-dimensional shape, and a position of a pile of the material, and the predicting unit is configured to predict a moisture content contained in the material at a specific time point in the future further based on the pile information.

The management system described above, wherein the weather information includes precipitation.

A management apparatus of a material which is a steelmaking raw material and/or a fuel for power generation and which is managed outdoors, the management apparatus including a moisture content information acquiring unit, a weather information acquiring unit, and a predicting unit, wherein the moisture content information acquiring unit is configured to acquire moisture content information indicating a moisture content contained in the material, the weather information acquiring unit is configured to acquire weather information indicating outdoor meteorological phenomena forecasted for the future, and the predicting unit is configured to predict a moisture content contained in the material at a specific time point in the future based on the moisture content information and the weather information.

A management method of a material which is a steelmaking raw material and/or a fuel for power generation and which is managed outdoors, the management method including a moisture content information acquisition step, a weather information acquisition step, and a prediction step, wherein in the moisture content information acquisition step, moisture content information indicating a moisture content contained in the material is acquired, in the weather information acquisition step, weather information indicating outdoor meteorological phenomena forecasted for the future is acquired, and in the prediction step, a moisture content contained in the material at a specific time point in the future is predicted based on the moisture content information and the weather information.

A management program of a material which is a steelmaking raw material and/or a fuel for power generation and which is managed outdoors, the management program causing a computer to function as a moisture content information acquiring unit, a weather information acquiring unit, and a predicting unit, wherein the moisture content information acquiring unit is configured to acquire moisture content information indicating a moisture content contained in the material, the weather information acquiring unit is configured to acquire weather information indicating outdoor meteorological phenomena forecasted for the future, and the predicting unit is configured to predict a moisture content contained in the material at a specific time point in the future based on the moisture content information and the weather information.

Needless to say, the present invention is not limited to the above.

According to the present invention, a moisture content at a specific time point in the future of a material arranged in a yard can be predicted.

### Brief Description of Drawings

[Fig. 1] Fig. 1 is a schematic view showing a management system according to a present embodiment.
[Fig. 2] Fig. 2 is a schematic view showing a functional configuration of a management apparatus according to the present embodiment.
[Fig. 3] Fig. 3 represents an example of a screen output to an output apparatus according to the present embodiment.
[Fig. 4] Fig. 4 is a schematic view showing a hardware configuration of the management apparatus according to the present embodiment.
[Fig. 5] Fig. 5 is a flowchart of a management method according to the present embodiment.

### Description of Embodiment

Hereinafter, an embodiment of the present invention will be described with reference to the drawings. Various feature items shown in the embodiment described below can be combined with each other.

A program for realizing software related to the present embodiment may be provided as a computer-readable non-transitory recording medium, provided so as to be downloadable from an external server, or provided so as to be run on an external computer such that functions thereof are realized on a client terminal (so-called cloud computing).

In addition, a "unit" as referred to in the present embodiment may include, for example, a combination of hardware resources implemented by a circuit in a broad sense and information processing by software which may be specifically implemented by such hardware resources. Furthermore, while various kinds of information are handled in the present embodiment, for example, such information are to be represented by a physical value of a signal value representing a voltage or a current, a level of a signal value as an aggregate of binary bits constituted of 0 or 1, or a quantum superposition (a so-called quantum bit), and communication and calculations can be executed on the circuit in a broad sense.

Moreover, the circuit in a broad sense is a circuit which is realized by at least appropriately combining a circuit, circuitry, a processor, a memory, and the like. In other words, a circuit in a broad sense includes an application specific integrated circuit (ASIC), a programmable logic device (for example, a simple programmable logic device (SPLD), a complex programmable logic device (CPLD), or a field programmable gate array (FPGA)), and the like.

### <Management system>

A management system according to the present embodiment is a management system of a material which is a steelmaking raw material and/or a fuel for power generation and which is managed outdoors. Specifically, the management system at least includes a moisture content information acquiring unit, a weather information acquiring unit, and a predicting unit. The moisture content information acquiring unit is configured to acquire moisture content information indicating a moisture content contained in a material. In addition, the weather information acquiring unit is configured to acquire weather information indicating outdoor meteorological phenomena forecasted for the future. Furthermore, the predicting unit is configured to predict a moisture content contained in the material at a specific time point in the future based on the moisture content information and the weather information.

In this case, a "steelmaking raw material" refers to a material used as a raw material and fuel for steelmaking at a steelmaking facility such as ironworks and examples thereof include coal, iron, dust, slag, coke, and sintered ore as well as auxiliary materials such as limestone and dolomite. In addition, a "fuel for power generation" refers to a material used as a fuel for generating power at a power-generating facility such as an electric power plant and examples thereof include coal and biomass fuel.

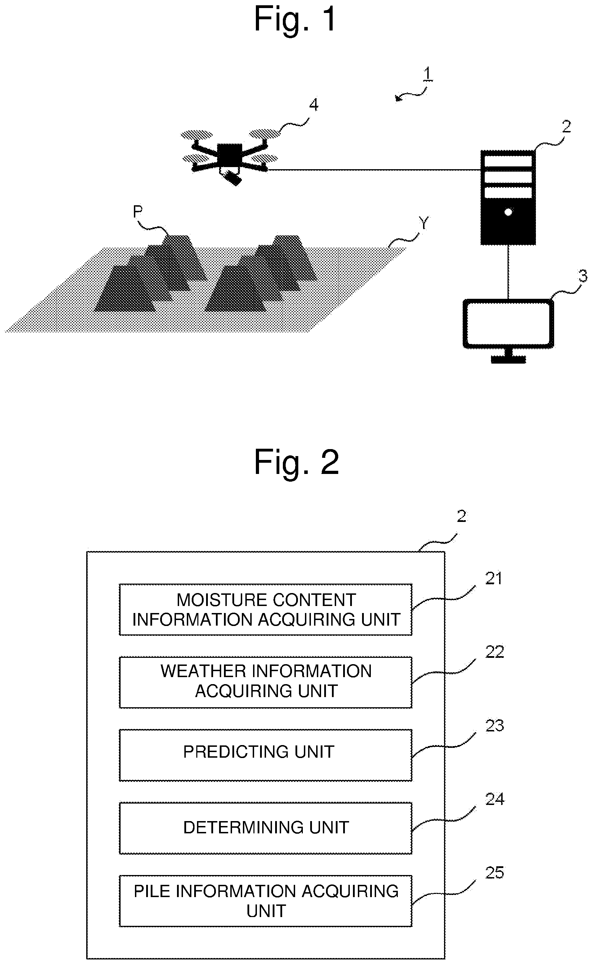

In addition, although not essential components, the management system according to the present embodiment may include one or two or more of a first output unit, a determining unit, a second output unit, a pile information measuring unit, and a pile information acquiring unit. A management system including all of these units will be mainly described with reference to Fig. 1 to be described below.

### [Functional configuration of management system]

Fig. 1 is a schematic view showing a management system according to the present embodiment. A management system 1 includes a management apparatus 2, an output apparatus 3, and a pile information measurement apparatus 4.

Among these components, the management apparatus 2 controls information processing for managing materials in the management system 1. Fig. 2 is a schematic diagram showing a functional configuration of a management apparatus according to the present embodiment. As shown in Fig. 2, the management apparatus 2 according to the present embodiment includes a moisture content information acquiring unit 21, a weather information acquiring unit 22, a predicting unit 23, a determining unit 24, and a pile information acquiring unit 25. Note that the output apparatus 3 is an example of the first output unit and the second output unit. In addition, while the pile information measurement apparatus 4 is an example of the pile information measuring unit, a description will be hereinafter given without particularly distinguishing the two.

### [Functions of management system]

Hereinafter, a function of each unit of the management system 1 will be described in specific terms.

### [Moisture content information acquiring unit]

The moisture content information acquiring unit 21 is configured to acquire moisture content information indicating a moisture content contained in a material.

In this case, the moisture content information acquired by the moisture content information acquiring unit 21 is a moisture content at a time point where the predicting unit 23 starts prediction (hereinafter, may also be referred to as a "time point of start of prediction") or at a specific time point further in the past than the time point where the predicting unit 23 starts prediction.

When using a moisture content at a specific time point in the past, a correction may or may not be performed in consideration of a change in the moisture content up to the present. In particular, when a storage environment or the like of a material is taken into consideration and a determination is made that a change in the moisture content from a specific time point in the past to the time point of start of prediction is small, a correction need not be performed. On the other hand, when a correction is to be performed with respect to the moisture content acquired by the moisture content information acquiring unit 21, an input/output amount of moisture to/from the material may be corrected in consideration of a storage environment or the like of the material. For example, when the material is arranged outside from a specific time point in the past to the time point of start of prediction, a record of weather information for the period may be taken into consideration. Cases where a correction is not performed with respect to a moisture content include a case where a manufacturer of a material notifies an initial moisture content of the material upon delivery, a case where an initial moisture content is measured, or the like and, furthermore, the material is arranged in the yard as-is and a prediction of a moisture content by the predicting unit is started or the like.

The moisture content information acquiring unit 21 is preferably configured to acquire the moisture content information for each pile P of the material. With piles P arranged in a yard, not all piles P are necessarily made of a same material. For example, due to differences in brands, lots, storage environments, and the like between piles P, moisture contents contained in the piles P may differ. In such a case, by acquiring moisture content information for each pile P of the material and predicting a moisture content contained in the material at a specific time point in the future for each pile P of the material with the predicting unit 23 to be described later, a moisture content at a specific time point in the future can be more appropriately predicted with respect to a material constituting each pile P.

A method of measuring a moisture content of a material is not particularly limited and, for example, the moisture content can be measured by a moisture meter adopting a microwave system, a nearinfrared system, or the like, a thermogravimeter, a dry weight system, and the like.

### [Weather information acquiring unit]

The weather information acquiring unit 22 is configured to acquire weather information indicating outdoor meteorological phenomena forecasted for the future.

As the weather information, although not particularly limited, one or two or more of precipitation (an amount of rainfall and an amount of snowfall), air temperature, a wind direction, a wind speed, an amount of solar radiation, relative humidity, and the like can be used. In particular, precipitation is preferably used as weather information. These pieces of weather information can be obtained from meteorological agencies of various countries such as Japan Meteorological Agency or from weather forecasting companies.

### [Predicting unit]

The predicting unit 23 is configured to predict a moisture content contained in a material at a specific time point in the future based on the moisture content information acquired by the moisture content information acquiring unit 21 and the weather information acquired by the weather information acquiring unit 22.

In this case, a "specific time point in the future" refers to a time point further into the future than a time point of start of prediction. Specifically, the specific time point in the future is not particularly limited and may be, for example, 1 second or more, 10 seconds or more, 1 minute or more, 1 hour or more, 2 hours or more, 5 hours or more, 10 hours or more, 20 hours or more, 1 day or more, 2 days or more, or 3 days or more after the time point of start of prediction. In addition, the specific time point in the future may be 100 days or less, 70 days or less, 50 days or less, 30 days or less, 20 days or less, 10 days or less, or 7 days or less after the time point of start of prediction.

Specifically, in the predicting unit 23, an increase or decrease of a moisture content is calculated from weather information by, for example, creating a function or a look-up table of relationships between the weather information and the increase or decrease of the moisture content from the time of prediction to a specific time point in the future (hereinafter, also simply referred to as an "increase or decrease of moisture content") or constructing the relationships as a learned model. By adding the increase or decrease of the moisture content to the moisture content information acquired by the moisture content information acquiring unit 21, the moisture content contained in the material at a specific time point in the future can be predicted.

For example, when precipitation is used as weather information, a total amount of increase of the moisture content due to the material absorbing the precipitation may be obtained.

In addition, for example, when air temperature, a wind speed, an amount of solar radiation, relative humidity, or the like is used as weather information, a total amount of decrease of the moisture content due to evaporation of moisture from the surface of the material may be obtained by the weather information.

Furthermore, the predicting unit 23 is preferably configured to predict the moisture content contained in a material at a specific time point in the future for each pile P of the material. As described above, since not all piles P arranged in a yard are necessarily made of a same material and moisture contents contained in the piles P may differ from each other, by predicting the moisture content contained in a material at a specific time point in the future for each pile P of the material and considering countermeasures appropriate to the moisture content, a more appropriate response may possibly be made to problems which may arise. Accordingly, a priority of responses to be made can be readily understood.

When the pile information acquiring unit 25 to be described later is to be provided, the predicting unit 23 is preferably configured to predict a moisture content contained in a material at a specific time point in the future based on pile information including one or more selected from the group consisting of an area, a volume, a planar shape, a three-dimensional shape, and a position of the pile P of a material acquired by the pile information acquiring unit 25 in addition to moisture content information and weather information.

Note that the "area" and the "planar shape" refer to an area and a planar shape in a plan view of the pile P as viewed from above the yard Y (the pile P).

When the predicting unit 23 uses information of any one or more of the area, the volume, the planar shape, and the three-dimensional shape of the pile P, for example, an increase in a moisture amount of a material can be calculated using a function, a look-up table, a learned model, or the like in combination with, for example, precipitation information from any of the area, the volume, the planar shape, and the three-dimensional shape of the pile P and from precipitation.

In addition, for example, an amount of water to directly precipitate on the pile P can be predicted from the area of the pile P and precipitation. An increase in moisture amount can also be calculated by obtaining, in advance, a relationship between the amount of water to directly precipitate and an increase in the moisture amount of a material.

Furthermore, when the predicting unit 23 uses information on the position of the pile P, for example, collating with weather information enables weather information at a more accurate position of the pile P to be applied and prediction with higher accuracy can be performed.

### [Determining unit]

The determining unit 24 is configured to determine whether or not a problem may arise in a material based on a prediction of a moisture content (hereinafter, also referred to as "prediction information").

As described above, specific examples of the problem that occurs at this point include clogging in a subsequent process such as a hopper, a silo, or a belt conveyor transfer part, a decline in production due to a drop in a bulk density of coke, and a pile collapse.

Whether or not a problem may arise in a material is determined based on prediction information or, in other words, a predicted moisture content contained in the material at a specific time point in the future. Specifically, for example, it is determined that a problem may arise when the prediction information exceeds a threshold provided in advance. The threshold need not be a threshold which inevitably causes a problem to occur when a value thereof is exceeded and may be a threshold which causes a certain level of possibility to occur when a value thereof is exceeded. In addition, the threshold may be a threshold which takes a safety coefficient into consideration.

As the threshold, an empirical numerical value accumulated through actual use may be set or a numerical value specified by carrying out an experiment may be set. In addition, the threshold may be or may not be changed for each material (type, brand, delivery date, or the like) which constitutes a pile.

Furthermore, a plurality of thresholds or, in other words, a plurality of numerical value bands may be provided with respect to the prediction information and a determination of whether or not graduated problems occur may be made with respect to the respective numerical value bands. For example, when the moisture content at a specific time point in the future is 8% or more and less than 11%, a determination that clogging is likely to occur in a subsequent process is made, and when the moisture content at the specific time point in the future is 11% or more, a determination that clogging will definitely occur in a subsequent process is made. Alternately, whether or not a different problem is to occur may be determined in each numerical value band. For example, when the moisture content at a specific time point in the future is 8% or more and less than 11%, a determination that clogging is likely to occur in a subsequent process is made, and when the moisture content at the specific time point in the future is 11% or more, a determination that a pile collapse is likely to occur is made.

### [Pile information acquiring unit]

The pile information acquiring unit 25 is configured to acquire pile information including one or more selected from the group consisting of an area, a volume, a planar shape, a three-dimensional shape, and a position of a pile P of a material.

By acquiring pile information including one or more selected from the group consisting of an area, a volume, a planar shape, a three-dimensional shape, and a position of the pile P of a material in this manner and using the pile information together with weather information, a moisture content contained in the material at a specific time point in the future can be appropriately predicted.

### [First output unit]

A first output unit 3a is configured to output, for each pile P of the material, a moisture content predicted by the predicting unit 23.

By outputting the moisture content predicted for each pile P in this manner, the pile P subject to problems can be visualized and an operator can be prompted to make early responses.

### [Second output unit]

A second output unit 3b is configured to output a warning when the determining unit determines that a problem may arise in the material.

In other words, for example, when the determining unit determines that a problem may arise as a result of the prediction information exceeding a threshold provided in advance, the second output unit 3b outputs a warning.

While the warning to be output from the second output unit 3b is not particularly limited, for example, specific contents of a problem such as "clogging" or "drop in bulk density" is preferably displayed.

While the first output unit 3a and the second output unit 3b have been described separately for convenience's sake, as the first output unit 3a and the second output unit 3b, a same output apparatus 3 such as that shown in Fig. 1 may be used or different output apparatuses may be used.

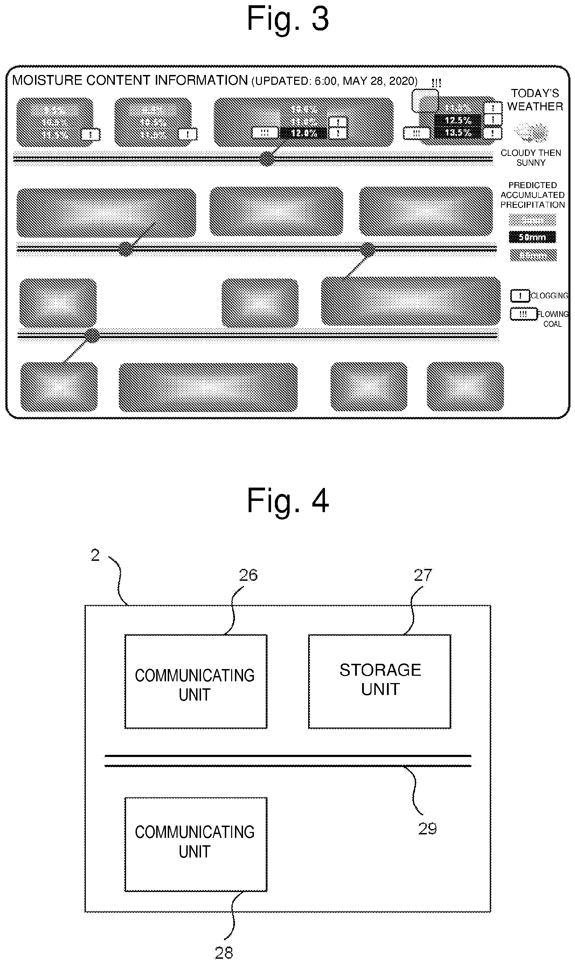

Hereinafter, an example of an output by the management system according to the present embodiment will be described. Fig. 3 represents an example of a screen output to the output apparatus 3 according to the present embodiment. The output screen shows an image of a plan view of an entire yard as viewed from above. In addition, on the output screen, a predicted moisture content and a warning are displayed on a single output screen. In this case, on the output screen, bands divided into three tiers are displayed on each pile and, further, numerical values are displayed on the bands. The numerical values indicate, in order from top to bottom, a moisture content of a pile on the day, for three days later, and for seven days later. The bands represent: an assessment of "safe" when the moisture content is less than 10% since a problem is unlikely to occur, an assessment of "caution" when the moisture content is 10% or more and less than 12% since the moisture content may cause clogging in a subsequent process, and an assessment of "danger" when the moisture content is 12% or more since a pile collapse can occur. Furthermore, an "!" mark is displayed in the case of "caution" or, in other words, when the moisture content is 10% or more and less than 12% and a "!!!" mark is displayed in the case of "danger" or, in other words, when the moisture content is 12% or more. While colors of bands are given dark tints in an order of "danger", "caution", and "safe" in Fig. 3, for example, "danger" may be colored red, "caution" may be colored yellow, and "safe" may be colored green to make assessments of moisture contents more visually recognizable.

For example, with respect to a pile in the top right of the output screen, a moisture content of a material is predicted as being 11.5% (color of "caution" and an "!" mark) on the day, 12.5% (color of "danger" and a "!!!" mark) for three days later, and 13.5% (color of "danger" and a "!!!" mark) for seven days later. In other words, with respect to the pile, it is shown that clogging can occur in a subsequent step on the day and a pile collapse can occur after three days or later.

In addition, the display of moisture contents described above can be switched to, for example, a display of precipitation and numerical values of precipitation may be displayed on the bands, such as three bands (on the day, three days later, and seven days later in order from top to bottom) colored in green when precipitation is 20 mm, colored in yellow when precipitation is 20 mm or more and less than 50 mm, and colored in red when precipitation is 50 mm or more.

Furthermore, a "!!!" mark is displayed in the top-left corner of the pile in the top right of the output screen. The mark means that a pile collapse is highly likely to occur and that the pile requires special care.

Today's weather and an accumulated value of predicted precipitation are shown on a right side of the output screen. Three vertically-arranged bands with respect to the accumulated value of predicted precipitation respectively represent the wind speed on the day, the wind speed for three days later, and the wind speed for seven days later in order from top to bottom. In the example of the three-grade assessment described earlier, the bands of the accumulated value of predicted precipitation are also displayed in dark tints in the order of "danger", "caution", and "safe". With respect to the accumulated value of predicted precipitation, thresholds to be criteria of "danger", "caution", and "safe" may or may not be changed for each of the same day, three days later, and seven days later.

While the example shown in Fig. 3 represents an example of tinting in accordance with the possibility of occurrence of a problem on an image of a pile, an output result of the management system 1 according to the present embodiment need not be displayed on an actual image taken from above the pile P as in the example shown in Fig. 3 and may be displayed on a model diagram. In addition, the output screen may or may not show today's weather and predicted precipitation as shown in Fig. 3. Furthermore, the output screen may or may not show information other than today's weather and predicted precipitation.

As described above, by providing thresholds with respect to a predicted moisture content at a specific time point in the future, weather information (precipitation), and the like and displaying a possibility of an occurrence of a problem so as to be visually recognizable, an operator or the like can quickly come up with a response and, at the same time, overlooking of problems can be suppressed.

In addition, by predicting a moisture content at a specific time point in the future for each pile P in the predicting unit and displaying information related to an occurrence of a problem such as the moisture content at a specific time point in the future for each pile P and weather information (precipitation) on an image of the pile P or on a model diagram, visibility of the operator can be further enhanced in terms of what kind of a problem is occurring in each pile P.

### [Pile information measuring unit]

The pile information measuring unit 4 is configured to measure pile information including one or more selected from the group consisting of an area, a volume, a planar shape, a three-dimensional shape, and a position of a pile P of a material.

Among pile information, the area, the volume, the planar shape, and the three-dimensional shape of the pile P can be calculated in consideration of scale from an image obtained by imaging from, for example, a position higher than a maximum height of the pile P such as above the pile P. Specifically, an example of the pile information measuring unit is an apparatus which performs imaging by mounting an imaging apparatus on a flying object such as a drone capable of flying at positions higher than the maximum height of the pile P or a boom such as a reclaimer capable of extending to a height which is higher than the maximum height of the pile P. In addition, the area of the pile P can also be measured by a survey inside the yard Y in which the piles P are arranged. While the pile information measuring unit 4 is not particularly limited, the flying object described above is preferably used from the viewpoint of easiness of measurement of pile information.

In addition, the position of the pile P among pile information is not particularly limited as long as the position of the pile can be quantitatively measured. For example, a global position may be measured by a device such as a global positioning system (GPS) or other global navigation satellite systems (GNSSs) or a position in an entire image in the yard obtained by imaging from a position higher than the maximum height of the pile P such as above the pile P may be measured.

While a height at which the pile information measuring unit 4 is arranged is not particularly limited, the pile information measuring unit 4 is preferably arranged at a position higher than the yard Y by 20 m or more and 200 m or less. Specifically, the height at which the pile information measuring unit 4 is arranged may be, for example, 25 m or more, 30 m or more, 35 m or more, 40 m or more, 45 m or more, 50 m or more, 55 m or more, 60 m or more, 65 m or more, 70 m or more, 75 m or more, 80 m or more, 85 m or more, 90 m or more, 95 m or more, 100 m or more, 105 m or more, 110 m or more, 115 m or more, 120 m or more, 125 m or more, 130 m or more, or 135 m or more and may be 195 m or less, 190 m or less, 185 m or less, 180 m or less, 175 m or less, 170 m or less, 165 m or less, or 160 m or less.

Pile information measured by the pile information measuring unit 4 may be transmitted to the pile information acquiring unit 25 by communicating therewith or may be recoded in a recording medium connected to the pile information measuring unit 4, and then acquired by the pile information acquiring unit 25 via the recording medium.

According to such a management system, a moisture content at a specific time point in the future of a material arranged in a yard can be predicted and an early response can be made to potentially arising problems caused by the moisture content at the specific time point in the future.

While specific responses depend on specific contents of a problem and are therefore not particularly limited, when it is determined that clogging can occur in a subsequent process, an anti-clogging agent is added to a material before the material reaches a hopper, a silo, a belt conveyor transfer part, or the like.

While the anti-clogging agent is not particularly limited, examples thereof include super absorbent polymers as defined in JIS K 7223 (1996) and JIS K 7224 (1996) such as poly(meth)acrylic acid, poly(meth)acrylate, poly(meth)acrylic acid ester, poly(meth)acrylamide, polyalkyleneimine, polyoxyalkylene, polymaleic acid, and a copolymer or the like containing any of the monomers constituting these super absorbent polymers.

When coal as a coke raw material has a high moisture content and a bulk density of coke charged into a coke oven can drop, a bulk density-increasing agent is added.

As the bulk density-increasing agent, although not particularly limited, for example, a surfactant can be used - specifically, as the bulk density-increasing agent, an anionic surfactant such as a dialkyl sulfosuccinic acid (with an alkyl group having 8 to 16 carbons) or a salt thereof (for example, a sodium salt, an ammonium salt, a potassium salt, or a triethanolamine salt) or a polyoxyethylene alkyl ether sulfate salt, a nonionic surfactant such as a polyoxyethylene (POE) addition polymer or a salt thereof, and the like can be used.

A location where the anti-clogging agent or the bulk density-increasing agent is added is not particularly limited as long as the addition takes place before reaching the hopper, the silo, the belt conveyor transfer part, or the like and the location may be a pile or in a subsequent process.

In addition, a water shielding agent is added when suppressing absorption of water by a pile installed outdoors.

As the water shielding agent, although not particularly limited, examples thereof include an acrylate-type resin emulsion solution, a methacrylate-type resin emulsion solution, and a vinyl acetate-type resin emulsion solution.

A water shielding agent made of such a resin emulsion solution forms hydrophobic coating on a surface of a pile. However, since a period of one to two days is required from an application of a resin emulsion with respect to the pile to the formation of coating, a water shielding effect cannot be obtained when the water shielding agent is applied immediately preceding precipitation or after the start of precipitation. With the management system according to the present embodiment, for example, since even a moisture content for three days later of a material arranged in a yard can be accurately predicted, such a water shielding agent can be added to an appropriate pile at an appropriate time. Accordingly, an amount of use of the water shielding agent which is expensive and of which application requires time and effort can be reduced.

The addition of these agents may be performed using addition apparatuses of the respective agents (an anti-clogging agent addition apparatus, a bulk density-increasing agent addition apparatus, and a water shielding agent addition apparatus, all not illustrated) or adding units of the respective agents (an anti-clogging agent adding unit, a bulk density-increasing agent adding unit, and a water shielding agent adding unit, all not illustrated). In addition, the agents may be automatically added using these addition apparatuses or adding units or may be manually added by an operator or the like.

### [Hardware configuration of management system]

Fig. 4 is a schematic view showing a hardware configuration of the management apparatus 2 according to the present embodiment. As shown in Fig. 4, the management apparatus 2 includes a communicating unit 26, a storage unit 27, and a control unit 28, and these constituent elements are electrically connected via a communication bus 29 inside the management apparatus 2. Hereinafter, the constituent elements will be further described.

While the communicating unit 26 is preferably wired communication means such as USB, IEEE 1394, Thunderbolt, and wired LAN network communication, the communicating unit 26 can include wireless LAN network communication, mobile communication such as 3G/LTE/5G, Bluetooth (registered trademark) communication, and the like when necessary. In other words, more preferably, the communicating unit 26 is implemented as an assembly of the plurality of communication means described above. Accordingly, exchange of information and commands is executed between the management apparatus 2 and other devices capable of communicating with the management apparatus 2.

The storage unit 27 stores various information defined according to the description provided above. The storage unit 27 can be implemented as, for example, a storage device such as a solid state drive (SSD) or a memory such as a random access memory (RAM) which stores information (arguments, arrays, and the like) temporarily necessary in relation to operation of a program. In addition, the storage unit 27 may be a combination thereof. Furthermore, the storage unit 27 stores various programs which can be read by the control unit 28 to be described later.

The control unit 28 performs processing and control of overall operations related to the management apparatus 2. The control unit 28 is, for example, a central processing unit (CPU, not illustrated). The control unit 28 realizes various functions related to the management apparatus 2 by reading a predetermined program stored in the storage unit 27. In other words, by causing information processing by software (stored in the storage unit 27) to be concretely realized by hardware (the control unit 28), the information processing can be executed as respective functional units in the control unit 28 as shown in Fig. 4. While a single control unit 28 is notated in Fig. 4, the reality is not limited thereto and a configuration may be adopted in which a plurality of control units 28 are provided for each function or a single control unit and a plurality of control units may be combined.

### <Management method>

A management method according to the present embodiment is a management method of a material which is a steelmaking raw material and/or a fuel for power generation and which is managed outdoors, and the management method includes a moisture content information acquisition step, a weather information acquisition step, and a prediction step. Among these steps, in the moisture content information acquisition step, moisture content information indicating a moisture content contained in the material is acquired. In addition, in the weather information acquisition step, weather information indicating outdoor meteorological phenomena forecasted for the future is acquired. Furthermore, in the prediction step, a moisture content contained in the material at a specific time point in the future is predicted based on the moisture content information and the weather information.

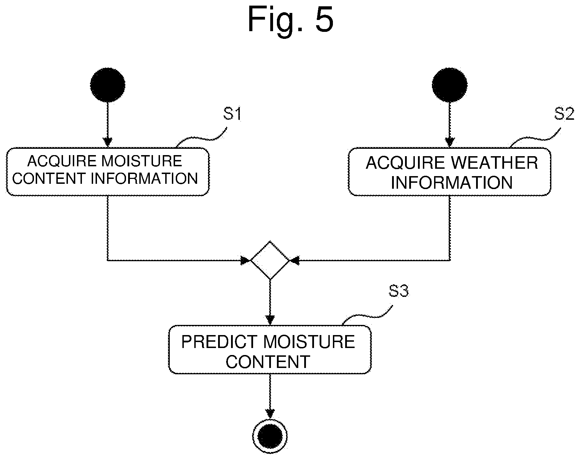

Fig. 5 is a flowchart of the management method according to the present embodiment. As shown in Fig. 5, in the management method according to the present embodiment, moisture content information is acquired (moisture content information acquisition step S1), weather information is acquired (weather information acquisition step S2), and with the moisture content information and the weather information as input information, a moisture content contained in a material at a specific time point in the future is predicted (prediction step S3). In this case, a precedence of order of the moisture content information acquisition step S1 and the weather information acquisition step S2 does not matter and the moisture content information acquisition step S1 may be performed first, the weather information acquisition step S2 may be performed first, or the moisture content information acquisition step S1 and the weather information acquisition step S2 may be performed at the same time.

Note that the management method according to the present embodiment may be provided with a determination step, a pile information acquisition step, a first output step, a second output step, a pile information measurement step, and an addition step. Since these steps are respectively similar to operations of the determining unit, the pile information acquiring unit, the first output unit, the second output unit, the pile information measuring unit, and the adding unit, descriptions thereof will be omitted here.

### <Management program>

A management program according to the present embodiment is a management program of a material which is a steelmaking raw material and/or a fuel for power generation and which is managed outdoors, and the management program causes a computer to function as a moisture content information acquiring unit, a weather information acquiring unit, and a predicting unit. Since the moisture content information acquiring unit, the weather information acquiring unit, and the predicting unit have been described above, descriptions thereof will be omitted here.

The present invention is not limited whatsoever to the embodiment described above and can be implemented with appropriate modifications.

### Reference Signs List

1 Management system
2 Management apparatus
21Moisture content information acquiring unit
22 Weather information acquiring unit
23Predicting unit
24Determining unit
25Pile information acquiring unit
26 Communicating unit
27Storage unit
28 Control unit
29 Communication bus
3 Output apparatus
3 a First output unit
3b Second output unit
4 Pile information measurement apparatus or pile information measuring unit
Y Yard
P Pile

## Claims

1. A management system of a material which is a steelmaking raw material and/or a fuel for power generation and which is managed outdoors, the management system comprising:
a moisture content information acquiring unit, a weather information acquiring unit, and a predicting unit, wherein
the moisture content information acquiring unit is configured to acquire moisture content information indicating a moisture content contained in the material,
the weather information acquiring unit is configured to acquire weather information indicating outdoor meteorological phenomena forecasted for the future, and
the predicting unit is configured to predict a moisture content contained in the material at a specific time point in the future based on the moisture content information and the weather information.

2. The management system according to claim 1, wherein
the moisture content information acquiring unit is configured to acquire the moisture content information for each pile of the material, and
the predicting unit is configured to predict a moisture content contained in the material at a specific time point in the future for each pile of the material.

3. The management system according to claim 2, further comprising
a first output unit, wherein
the first output unit is configured to output, for each pile of the material, a moisture content predicted by the predicting unit.

4. The management system according to any one of claims 1 to 3, further comprising
a determining unit, wherein
the determining unit is configured to determine whether or not a problem may arise in the material based on a prediction of the moisture content.

5. The management system according to claim 4, further comprising
a second output unit, wherein
the second output unit is configured to output a warning when the determining unit determines that a problem may arise in the material.

6. The management system according to any one of claims 1 to 5, further comprising
a pile information acquiring unit, wherein
the pile information acquiring unit is configured to acquire pile information including one or more selected from the group consisting of an area, a volume, a planar shape, a three-dimensional shape, and a position of a pile of the material, and
the predicting unit is configured to predict a moisture content contained in the material at a specific time point in the future further based on the pile information.

7. The management system according to any one of claims 1 to 6, wherein
the weather information includes precipitation.

8. A management apparatus of a material which is a steelmaking raw material and/or a fuel for power generation and which is managed outdoors, the management apparatus comprising:
a moisture content information acquiring unit, a weather information acquiring unit, and a predicting unit, wherein
the moisture content information acquiring unit is configured to acquire moisture content information indicating a moisture content contained in the material,
the weather information acquiring unit is configured to acquire weather information indicating outdoor meteorological phenomena forecasted for the future, and
the predicting unit is configured to predict a moisture content contained in the material at a specific time point in the future based on the moisture content information and the weather information.

9. A management method of a material which is a steelmaking raw material and/or a fuel for power generation and which is managed outdoors, the management method comprising:
a moisture content information acquisition step, a weather information acquisition step, and a prediction step, wherein
in the moisture content information acquisition step, moisture content information indicating a moisture content contained in the material is acquired,
in the weather information acquisition step, weather information indicating outdoor meteorological phenomena forecasted for the future is acquired, and
in the prediction step, a moisture content contained in the material at a specific time point in the future is predicted based on the moisture content information and the weather information.

10. A management program of a material which is a steelmaking raw material and/or a fuel for power generation and which is managed outdoors,
the management program causing a computer to function as a moisture content information acquiring unit, a weather information acquiring unit, and a predicting unit, wherein
the moisture content information acquiring unit is configured to acquire moisture content information indicating a moisture content contained in the material,
the weather information acquiring unit is configured to acquire weather information indicating outdoor meteorological phenomena forecasted for the future, and
the predicting unit is configured to predict a moisture content contained in the material at a specific time point in the future based on the moisture content information and the weather information.
